# EUROPEAN PATENT APPLICATION

(11) **EP 3 357 728 A1**
(43) Date of publication of application: **08.08.2018**
(21) Application number: 16850989.1
(22) Date of filing: 29.08.2016
(51) Int. Cl.: B60K 6/40, B60K 6/442, B60K 6/547, F16H 3/091

(54) **POWERTRAIN**

(30) Priority: 30.09.2015 JP 2015194699
(71) Applicant: Jatco Ltd, Fuji-shi, Shizuoka 417-8585 (JP)
(72) Inventor: KURAHASHI, Yoshihiro, Fuji-shi Shizuoka 417-8585 (JP); TOYOHARA, Kouhei, Fuji-shi Shizuoka 417-8585 (JP)
(74) Representative: Grünecker Patent- und Rechtsanwälte PartG mbB
(86) International application number: PCT/JP2016/075115
(87) International publication number: WO 2017/056813

(57) **Abstract**

A powertrain includes; a first shaft (11) connected to a first power source; a second shaft (12, 13) including first and second parts connected with a second power source and an output element respectively; first and second drive gears supported so as to be able to rotate relative to the first shaft (11); first and second driven gears supported on and fixed to the second shaft (12, 13) and respectively meshing with the first and second drive gears constantly; a first clutch (DC1) capable of engaging the first drive gear with the first shaft (11); a second clutch (DC2) capable of engaging the second drive gear with the first shaft (11); and a third clutch (CL2) capable of connecting and disconnecting the first part to and from the second part between the first and second driven gears. Consequently, a powertrain with driving paths from multiple power sources in multiple stages can be achieved while avoiding the use of a three-shaft structure.

## Description

### TECHNICAL FIELD

The present invention relates to a powertrain in which multiple power sources are connected and which provides multiple driving paths to an output shaft.

### BACKGROUND TECHNOLOGY

In a patent document 1, a powertrain has been disclosed. The powertrain is equipped with a first driving path in which a driving force is output to an output shaft by using an engine as a drive power source, and with a second drive path in which a driving force is output to the output shaft by using an electric motor disposed on a different shaft from the engine, and each of the drive paths is formed in multiple stages.

However, when each of the drive paths is formed in multiple stages, a three-shaft structure formed of a shaft with the engine as a power source, a shaft with the electric motor as a power source, and of the output shaft is adopted, and there is therefore problem that the size of the powertrain becomes large.

### PRIOR ART DOCUMENT

### PATENT DOCUMENT

Patent Document 1: Japanese Patent Application Publication 2012-122614

### SUMMARY OF THE INVENTION

An object of the present invention is to provide a powertrain in which a driving path from multiple power sources is formed in multiple stages can be achieved while avoiding the use of a three-shaft structure.

To achieve the above object, the powertrain of the present invention includes: a first shaft connected to a first power source; a second shaft including a first part connected with a second power source and a second part connected with an output element; a first drive gear and a second drive gear which are supported so as to be able to rotate relative to the first shaft; a first driven gear and a second driven gear which are fixed to and supported on the second shaft and which respectively mesh with the first drive gear and the second drive gear at all times; a first clutch which is capable of engaging the first drive gear with the first shaft; a second clutch which is capable of engaging the second drive gear with the first shaft; and a third clutch which is capable of connecting and disconnecting the first part of the second shaft to and from the second part of the second shaft between the first driven gear and the second driven gear.

Consequently, the power path between the first power source and the output element and the power path between the second power source and the output element can be each formed in multiple stages by a two-shaft structure, and thereby the size of the powertrain can be reduced.

### BRIEF DESCRIPTION OF THE DRAWINGS

FIG.1 is a schematic system diagram showing a powertrain of a first embodiment.
FIG. 2 is a schematic diagram showing a first traveling mode of the powertrain of the first embodiment.
FIG. 3 is a schematic diagram showing a second traveling mode of the powertrain of the first embodiment.
FIG. 4 is a schematic diagram showing a third traveling mode of the powertrain of the first embodiment.
FIG. 5 is a schematic diagram showing a fourth traveling mode of the powertrain of the first embodiment.
FIG. 6 is a schematic system diagram showing a powertrain of a second embodiment.
FIG. 7 is a schematic system diagram showing a powertrain of a third embodiment.

### MODE FOR IMPLEMENTING THE INVENTION

### [First embodiment]

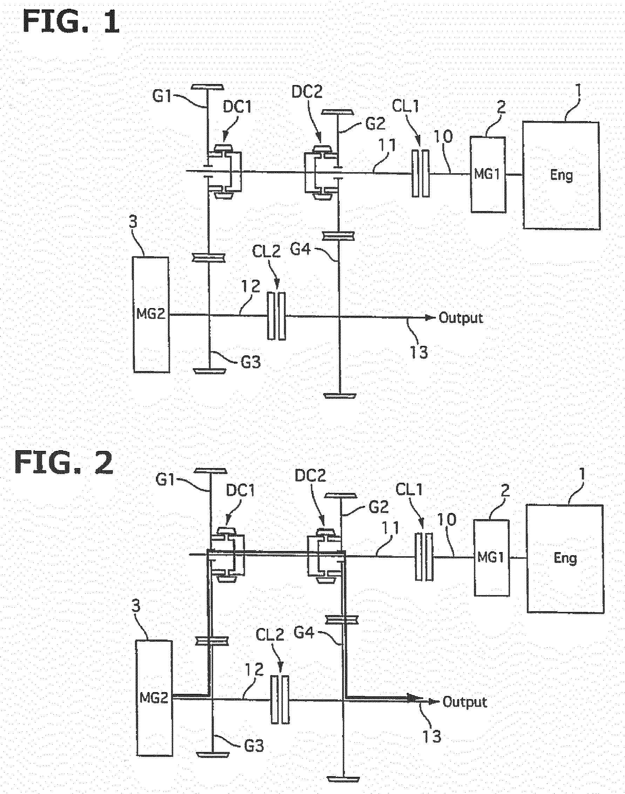

FIG. 1 is a schematic system diagram showing a powertrain of a first embodiment. An engine 1 that is an internal combustion engine for a vehicle is connected with a first motor generator 2 and it configures a first power source. A clutch may be additionally provided between the engine 1 and the first motor generator 2. In the following, the engine 1 and/or the first motor generator 2 will be collectively described as the first power source. With the first power source, it is possible to realize a state in which the torque from only the engine 1 is output, a state in which the torque from only the first motor generator 2 is output, and a state in which the difference torque between the torque from the engine 1 and the regenerative torque when the first motor generator 2 is used as a generator is output.

The first power source is connected with a first shaft 10. The first shaft 10 is coaxially disposed with a second shaft 11 via a first clutch CL1 that is a friction clutch. The second shaft 11 is disposed with a first gear G1 and a second gear G2 which are capable of rotating relative to the second shaft 11. A dog clutch DC1 which is capable of engaging the first gear G1 with the second shaft 11 is disposed between the first gear G1 and the second shaft 11. Similar to this, a second dog clutch DC2 which is capable of engaging the second gear G2 with the second shaft 11 is disposed between the second gear G2 and the second shaft 11. Here, not only a dog clutch but also another engaging element can be adopted, and it is not especially limited.

The powertrain has a two-shaft structure, and includes a third shaft 12 arranged parallel to the first shaft 10 and the second shaft 11 and a fourth shaft 13 arranged coaxially with the third shaft 12. The third shaft 3 is connected with a second motor generator 3, which is a second power source, at the first end thereof and with a second clutch CL2 at the second end thereof. The fourth shaft 13 is connected with the second clutch CL2 at the first end thereof and with an output element *Output* at the second end thereof. The output element *Output* transmits a drive force to a drive wheel via a final reduction gear and the like which are not shown in the drawings. In addition, in the powertrain of the first embodiment, although, as an example, an arrangement is shown in which the second motor generator 3 is disposed on the side axially opposite to the first motor generator 2, the second motor generator 3 and the first motor generator 2 can be disposed on one side in the axial direction so as to be concentrated, and it is not especially limited.

The third shaft 12 is fixed with a third gear G3 which meshes with the first gear G1 at all times, and the third shaft 12 rotates integrally with the third gear G3 at all times. The fourth shaft 13 is fixed with a fourth gear G4 which meshes with the second gear G2 at all times. The fourth shaft 13 rotates integrally with the fourth gear G4 at all times.

The second clutch CL2 is a friction clutch, and is disposed between the third shaft 12 and the fourth shaft 13. The third shaft 12 rotates integrally with the fourth shaft 12 by the engagement of the second clutch CL2, and the third shaft 12 and the fourth shaft 13 rotate independently of each other by the disengagement of the second clutch CL2.

FIG. 2 is a schematic diagram showing a first traveling mode of the powertrain of the first embodiment. A thick solid line in FIG. 2 shows a torque transmission path. In the first traveling mode, the first clutch CL1 is disengaged, the first dog clutch DC1 and the second dog clutch DC2 are each engaged, and the second clutch CL2 is disengaged. The torque from the second motor generator 3 is transmitted from the third gear G3 to the first gear G1, and the second shaft 11 rotates by the first gear G1. The rotation of the second shaft 11 is transmitted from the second gear G2 to the fourth gear G4, and the fourth shaft 13 rotates via the fourth gear G4. Here, when the number of the teeth of the first gear G1 is defined as Z1, the number of the teeth of the second gear G2 is defined as Z2, the number of the teeth of the third gear G3 is defined as Z3, and the number of the teeth of the fourth gear G4 is defined as Z4, the number of the teeth of each of the gears is set such that a reduction ratio becomes (Z1/Z2) × (Z4/Z3) = 2. Accordingly, the torque of the second motor generator 3 is amplified and it is output to the output element *Output.*

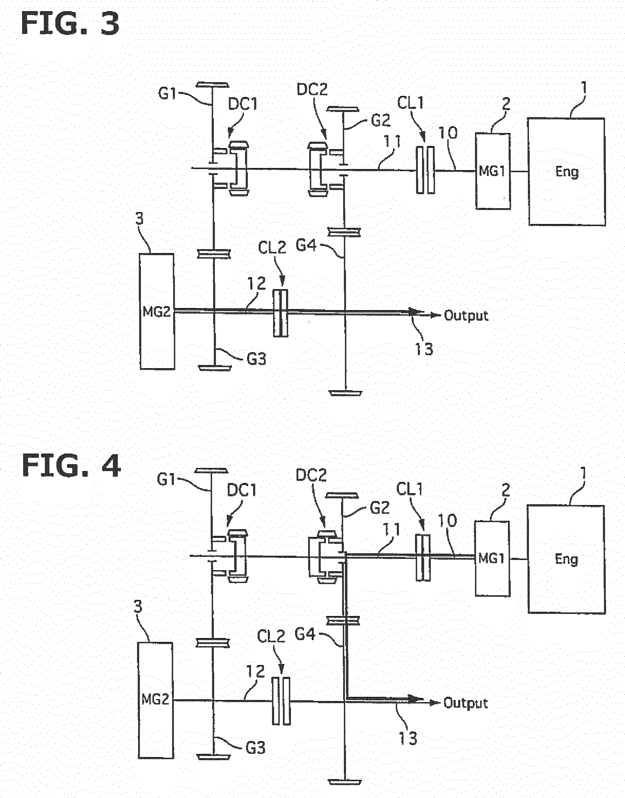

FIG. 3 is a schematic diagram showing a second traveling mode of the powertrain of the first embodiment. A thick solid line in FIG. 3 shows a torque transmission path. In the second traveling mode, the first clutch CL1 is disengaged, the first dog clutch DC1 and the second dog clutch DC2 are each disengaged, and the second clutch CL2 is engaged. The torque of the second motor generator 3 is directly transmitted to the output element *Output.* In this case, the reduction ratio between the second motor generator 3 and the output element *Output* is 1.

FIG. 4 is a schematic diagram showing a third traveling mode of the powertrain of the first embodiment. A thick solid line in FIG. 4 shows a torque transmission path. In the third traveling mode, the first clutch CL1 is engaged, the first dog clutch DC1 is disengaged, the second dog clutch DC2 is engaged, and the second clutch CL2 is disengaged. The torque of the first power source is transmitted to the fourth shaft 13 via the second gear G2 and the fourth gear G4, and the fourth shaft 13 rotates. Here, since the second clutch CL2 is disengaged, it is not always necessary to disengage the first dog clutch DC1, and for example, the first dog clutch DC1 is engaged, and it may perform the transmission and the receiving of the torque between the second motor generator 3 and the second shaft 11. The reduction ratio is set such that (Z4/Z3) becomes approximately 1.

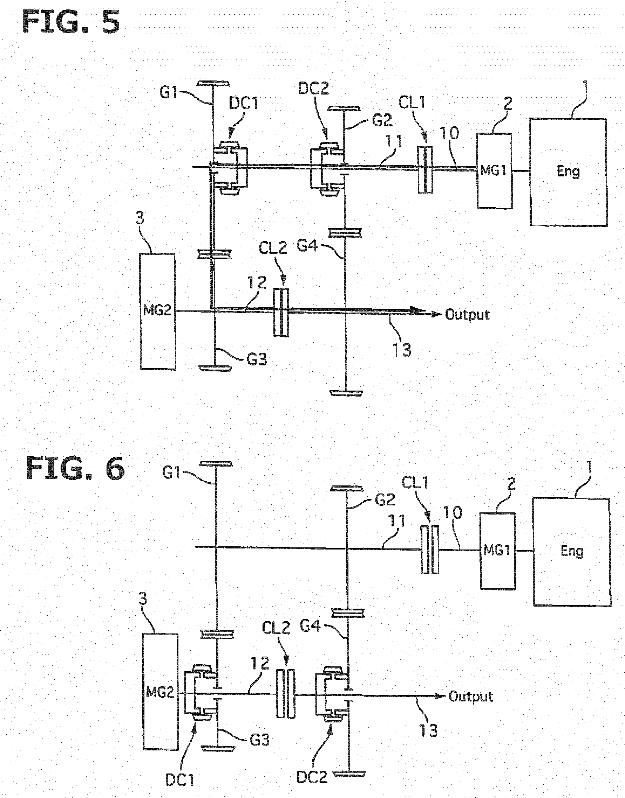

FIG. 5 is a schematic diagram showing a fourth traveling mode of the powertrain of the first embodiment. A thick solid line in FIG. 5 shows a torque transmission path. In the fourth traveling mode, the first clutch CL1 is engaged, the second dog clutch DC2 is disengaged, the first dog clutch DC1 is engaged, and the second clutch CL2 is engaged. The torque of the first power source is transmitted to the third shaft 12 and the fourth shaft 13 via the first gear G1 and the third gear G3, and the fourth shaft 13 rotates. The number of the teeth of each of the gears is set such that the reduction ratio becomes (Z2/Z1) = 0.5. Accordingly, the rotation speed of the first power source is increased and it is output.

Here, the background that the configuration of the first embodiment is adopted will be explained. In case where one shaft achieves only one rotation state like a prior art, when a driving path from one power source is formed in multiple states, by using a three-shaft structure formed of a shaft having one power source, a shaft having the other power source and a shaft connected to an output element, an interlock state is avoided. However, if the three-shaft structure is used, the size in the radial direction of a powertrain becomes large. In addition, in case of achieving to form the driving path in the multiple states with a two-shaft structure, it can be considered that a shaft connected to one power source is arranged coaxially with a shaft connected to the other drive source. In this case, to achieve to form a driving path from one drive source in multiple stages, at least two rows of gear trains are provided to each of the shafts disposed coaxially with each other, and four rows of gear trains are required, and consequently, the size in the axial direction of the powertrain becomes large.

In contrast to this, in the first embodiment, since the second clutch CL2 is provided to the shaft connected to the output element *Output,* the second motor generator 3 and the output element *Output* can rotate independent of each other. Therefore, since the torque output from the second motor generator 3 can be transmitted from the third shaft 12 to the fourth shaft 13 via the second shaft 11 disposed in a different axial position, it is not necessary to increase a gear row. In other words, by disengaging the second clutch CL2, as the reduction ratio between the second motor generator 3 and the output element *Output,* it is possible to obtain a reduction ratio obtained by combining both of the gear trains of the gear train formed of the first gear G1 and the third gear G3 and the gear train formed of the second gear G2 and the fourth gear G4.

That is, in the powertrain of the first embodiment, when the second motor generator 3 is used as a power source, by providing the first traveling mode in which the reduction ratio is 2 and the second traveling mode in which the reduction ratio is 1, even if the first embodiment has a two-shaft structure, the power transmission path from one of the power sources can be formed in multiple stages. Similar to this, in case where the first power source is used as a power source, by providing the third traveling mode in which the reduction ratio becomes approximately 1 and the fourth traveling mode in which the reduction ratio becomes 0.5, even if the first embodiment has a two-shaft structure, the power transmission path from one of the power sources can be formed in multiple stages.

As explained above, in the first embodiment, effects listed below can be obtained.
(1) The powertrain is equipped with: the second shaft 11 (first shaft) which is connected to the first power source; the third shaft 12 and the forth shaft 13 (second shaft) including a first part connected with the second motor generator 3 (second power source), and a second part connected with the output element *Output,* the first gear G1 and the second gear G2 which are supported so as to be able to rotate relative to the second shaft 11; the third gear and the fourth gear which are fixed to and supported on the third shaft 12 and the fourth shaft 13 respectively and which respectively mesh with the first gear G1 and the second gear G2 at all times; the first dog clutch DC1 (first clutch) which is capable of engaging the first gear G1 with the second shaft 11; the second dog clutch DC2 (second clutch) which is capable of engaging the second gear G2 with the second shaft 11; and the second clutch CL2 (third clutch) which is capable of connecting and disconnecting the third shaft 12 to and from the fourth shaft 13 between the third gear G3 and the fourth gear G4.
   Consequently, the power path between the first power source and the output element *Output* and the power path between the second motor generator 3 and the output element *Output* can be each formed in multiple stages by a two-shaft structure, and thereby the size of the powertrain can be reduced.
(2) The powertrain includes: the first traveling mode (first power transmission state) in which the first dog clutch DC1 and the second dog clutch DC2 are each engaged and the second clutch CL2 is disengaged, and the path from the second motor generator 3 to the output element *Output* is secured; and the second traveling mode (second power transmission state) in which the first dog clutch DC1 and the second dog clutch DC2 are each disengaged and the second clutch CL2 is engaged, and the path from the second motor generator 3 to the output element *Output* is secured.
   Consequently, the driving path in which the second motor generator 3 is used as a power source can be formed in multiple stages, and thereby it is possible to provide an efficient traveling state according to a feature of motor torque.
(3) The powertrain includes: the third traveling mode (third power transmission state) in which the second dog clutch DC2 is engaged and the first dog clutch DC1 and the second clutch CL2 are each disengaged, and the path from the first power source to the output element *Output* is secured; and the fourth traveling mode (fourth power transmission state) in which the first dog clutch DC1 and the second clutch CL2 are each engaged and the second dog clutch DC2 is disengaged, and the path from the first power source to the output element *Output* is secured.
   Consequently, the driving path in which the engine 1 is used as a power source can be formed in multiple stages, and thereby it is possible to provide an efficient traveling state according to a feature of motor torque.
(4) The second shaft 11 is equipped with the first clutch CL1 (fourth clutch) which is capable of connecting and disconnecting the first power source to and from the second shaft 11.
   Consequently, when torque is output from the second motor generator 3 and a vehicle travels, engine friction is avoided, and it is possible to realize a high efficient traveling state.
(5) The first power source is formed of the engine 1 which is an internal combustion engine, and the second power source is formed of the motor generator.
(6) The first power source is formed of the engine 1 which is an internal combustion engine and the first motor generator 2. It is therefore possible to provide various traveling modes such as the state in which not only the torque output from the engine 1 but also the torque of the first motor generator 2 are added and the state in which torque is output while generating electricity by the first motor generator 2.

### [Second embodiment]

Next, a second embodiment will be explained. The basic structure of the second embodiment is the same as the structure of the first embodiment, and only different points will be explained. FIG. 6 is a schematic system diagram showing a powertrain of the second embodiment. In the first embodiment, as an example, it has been shown that the first dog clutch DC1 and the second dog clutch DC2 are provided to the second shaft 11. In contrast to this, in the second embodiment, it is different in that the first dog clutch DC1 is provided to the third shaft 12, and the second dog clutch DC2 is provided to the fourth shaft 13. With this, the first gear G1 and the second gear G2 rotate integrally with the second shaft 11 at all times, the third gear G3 is supported so as to be able to rotate relative to the third shaft 12, and the fourth gear G4 is supported so as to be rotate relative to the fourth shaft 13. Consequently, the same effect as the first embodiment can be obtained.
(7) In the second embodiment, the powertrain equipped with: the second shaft 11 (first shaft) which is connected to the first power source; the third shaft 12 and the fourth shaft 13 (second shaft) including a first part connected with the second motor generator 3 (second power source) and a second part connected with the output element *Output,* the first gear G1 and the second gear G2 which are fixed to and supported on the second shaft 11; the third gear and the fourth gear which are supported so as to be able to rotate relative to the third shaft 12 and the fourth shaft 13 respectively and which respectively mesh with the first gear G1 and the second gear G2 at all times; the first dog clutch DC1 (first clutch) which is capable of engaging the third gear G3 with the third shaft 12; the second dog clutch DC2 (second clutch) which is capable of engaging the fourth gear G4 with the fourth shaft 13; and the second clutch CL2 (third clutch) which is capable of connecting and disconnecting the third shaft 12 to and from the fourth shaft 13 between the third gear G3 and the fourth gear G4.

Consequently, the power path between the first power source and the output element *Output* and the power path between the second motor generator 3 and the output element *Output* can be each formed in multiple stages by a two-shaft structure, and thereby the size of the powertrain can be reduced.

### [Third embodiment]

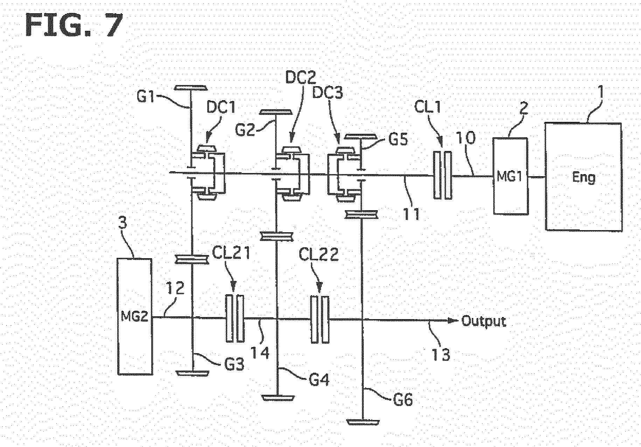

Next, a third embodiment will be explained. The basic structure of the third embodiment is the same as the structure of the first embodiment, and only different points will be explained. FIG. 7 is a schematic system diagram showing a powertrain of the third embodiment. In addition to the structure of the first embodiment, the second shaft 11 includes a fifth gear G5 which is supported so as to be able to rotate relative to the second shaft 11. In addition, the fourth shaft 13 includes a sixth gear G6 which meshes with the fifth gear G5 at all times and which is fixed to and supported on the fourth shaft G6. In addition, a fifth shaft 14 to and on which the fourth gear G4 is fixed and supported is included between the fourth shaft 13 and the third shaft 12. A first-side second clutch CL21 which is capable of connecting and disconnecting the fifth shaft 14 to and from the third shaft 12 is included between the fifth shaft 14 and the third shaft 12. In addition, a second-side second clutch CL22 which is capable of connecting and disconnecting the fifth shaft 14 to and from the fourth shaft 13 is included between the fifth shaft 14 and the fourth shaft 13. By the combination of the engagement and the disengagement of each of the clutches, it is possible to provide a powertrain formed in more multiple stages.

### [Another embodiment]

As the above, although the present invention has been explained based on the embodiments, it is not limited to the above embodiments, and the present invention may be applied to an automatic transmission equipped with another structure. For example, in the embodiments, the power sources configured by the combination of the engine as an internal combustion engine and the motor generator have been shown as an example. However, all of the power sources may be configured by motor generators. In addition, in the embodiments, although the structure in which the gear trains are arranged in two rows or three rows has been shown as an example, a plurality of rows more than three rows of gear trains are provided and the powertrain may be formed in multiple states. In addition, although the powertrain in which the first clutch CL1 is provided has been shown as an example, the configuration in which the first power source is connected to the second shaft 11 at all times without providing the first clutch CL1 may be adopted. Moreover, in the embodiments, although the second clutch CL2 is a friction clutch, a dog clutch may be provided.

In addition, in the first embodiment, although the reduction ratio achieved by the four traveling modes is set to 2, 1, approximately 1 and 0.5, a combination of traveling modes which is capable of achieving another reduction ratio may be used in consideration of a proper ratio between the stages. In addition, when the present invention is used for hybrid vehicles, a reduction ratio may be set to be suitable for mode transition in consideration of the transition from an engine traveling mode to a motor traveling mode in which an engine is not used.

## Claims

1. A powertrain comprising:
a first shaft connected to a first power source;
a second shaft including a first part connected with a second power source and a second part connected with an output element;
a first gear and a second gear which are supported so as to be able to rotate relative to the first shaft;
a third gear and a fourth gear which are fixed to and supported on the second shaft and which respectively mesh with the first gear and the second gear at all times;
a first clutch which is capable of engaging the first gear with the first shaft;
a second clutch which is capable of engaging the second gear with the first shaft; and
a third clutch which is capable of connecting and disconnecting the first part of the second shaft to and from the second part of the second shaft between the third gear and the fourth gear.

2. A powertrain comprising:
a first shaft connected to a first power source;
a second shaft including a first part connected with a second power source and a second part connected with an output element;
a first gear and a second gear which are fixed to and supported on the first shaft;
a third gear and a fourth gear which are supported so as to be able to rotate relative to the second shaft and which respectively mesh with the first gear and the second gear at all times;
a first clutch which is capable of engaging the third gear with the second shaft;
a second clutch which is capable of engaging the fourth gear with the second shaft; and
a third clutch which is capable of connecting and disconnecting the first part of the second shaft to and from the second part of the second shaft between the third gear and the fourth gear.

3. The powertrain according to claim 1 or 2, wherein a first power transmission state is included in which the first clutch and the second clutch are each engaged and the third clutch is disengaged, and a path from the second power source to the output element is secured; and
wherein a second power transmission state is included in which the first clutch and the second clutch are each disengaged and the third clutch is engaged, and a path from the second power source to the output element is secured.

4. The powertrain according to any one of claims 1 to 3, wherein a third power transmission state is included in which the second clutch is engaged and the first clutch and the third clutch are each disengaged, and a path from the first power source to the output element is secured, and
wherein a fourth power transmission state is included in which the first clutch and the third clutch are each engaged and the second clutch is disengaged, and a path from the first power source to the output element is secured.

5. The powertrain according to any one of claims 1 to 4, wherein the first shaft is provided with a fourth clutch which is capable of connecting and disconnecting the first power source to and from the first shaft.

6. The powertrain according to any one of claims 1 to 5, wherein the first power source is formed of an engine which is an internal combustion engine, and the second power source is formed of a motor generator.

7. The powertrain according to claim 6, wherein the first power source is formed of the engine which is the internal combustion engine and a motor generator.
